# EUROPÄISCHE PATENTSCHRIFT

(11) **EP 4 132 869 B1**
(45) Veröffentlichungstag und Bekanntmachung des Hinweises auf die Patenterteilung: **21.05.2025**
(21) Anmeldenummer: 21717365.7
(22) Anmeldetag: 31.03.2021
(51) Int. Cl.: B65G 1/137, G07F 11/00, G07F 9/02, G07F 11/16

(54) **AUTOMATISCHES LAGER ZUR LAGERUNG VON GEGENSTÄNDEN SOWIE VERFAHREN ZUR STEUERUNG EINES AUTOMATISCHEN LAGERS**
AUTOMATIC WAREHOUSE FOR STORING OBJECTS AND METHOD FOR CONTROLLING AN AUTOMATIC WAREHOUSE
DISPOSITIF DE STOCKAGE AUTOMATIQUE CONÇU POUR STOCKER DES OBJETS ET PROCÉDÉ POUR COMMANDER UN DISPOSITIF DE STOCKAGE AUTOMATIQUE

(30) Priorität: 08.04.2020 DE 102020109868
(43) Veröffentlichungstag der Anmeldung: 15.02.2023
(73) Patentinhaber: Gebr. Willach GmbH, 53809 Ruppichteroth (DE)
(72) Erfinder: WILLACH, Jens, 53783 Eitorf (DE)
(74) Vertreter: dompatent von Kreisler Selting Werner - Partnerschaft von Patent- und Rechtsanwälten mbB
(86) Internationale Anmeldenummer: PCT/EP2021/058503
(87) Internationale Veröffentlichungsnummer: WO 2021/204631

(56) Entgegenhaltungen:
- EP-A1- 3 438 023
- DE-A1- 102006 031 054
- DE-U1- 202017 105 345
- US-B1- 8 788 341

## Beschreibung

Die vorliegende Erfindung betrifft ein automatisches Lager zur Lagerung von Gegenständen sowie ein Verfahren zur Steuerung eines automatischen Lagers.

Derartige Lager weisen häufig einen Lagerbereich mit mehreren Lagerplätzen für die Gegenstände auf, wobei die Lagerplätze zur Einlagerung und Entnahme der Gegenstände oder zur Entnahme der Gegenstände von einem Manipulator bedienbar sind. Bei derartigen Lagern ist der Lagerbereich zumindest teilweise von Gehäusewänden umgeben.

Derartige automatische Lager sind beispielsweise Lagerautomaten für Apotheken. In diesen Lagern wird der Manipulator mit einer hohen Geschwindigkeit bewegt. Daher dürfen aus Sicherheitsgründen keine Personen in den Lagerbereich eintreten, wenn der Manipulator die Lagerplätze bedient. Um eine Kontrollmöglichkeit für den Lagerbereich zu schaffen, sind bei derartigen automatischen Lagern Sichtfenster vorgesehen, durch die der Benutzer ins Lagerinnere blicken kann. Da der Sichtweg von dem Sichtfenster in den Lagerbereich unverbaut sein muss, sind dadurch Einschränkungen bei der Konstruktion der automatischen Lager gegeben.

Die automatischen Lager weisen eine Steuervorrichtung zur Steuerung des Manipulators und zur Verwaltung der Lagerbereiche auf, wobei zwischen einer herkömmlichen Anzeigevorrichtung, wie beispielsweise einem Computermonitor, und der Steuervorrichtung eine Datenkommunikation erfolgt und Daten der Steuervorrichtung an der Anzeigevorrichtung ausgegeben werden. Die Anzeigevorrichtung ist bei den vorbekannten Lagern häufig fest installiert, sodass keine Einstellmöglichkeiten für den Benutzer gegeben sind.

Aus EP 3 438 023 A1 ist ein automatisches Lager zur Lagerung von Arzneimitteln nach dem Oberbegriff von Anspruch 1 bekannt. Ferner beschreiben DE 20 2017 105345 U1 und US 8 788 341 B1 weitere automatisches Lager.

Bei der Bedienung eines automatischen Lagers, beispielsweise eines Apothekenlagers, kann es vorkommen, dass ein Bediener mehrere Stunden mit der Einlagerung der Gegenstände, der Lagerpflege oder der Lagerverwaltung beschäftigt ist, sodass aufgrund der fest installierten Anzeigevorrichtung und der nicht vorhandenen oder nur geringen Einstellmöglichkeiten der Anzeigevorrichtung es zu unbequemen Haltungen bei dem Benutzer kommen kann.

Es ist daher die Aufgabe der vorliegenden Erfindung, ein automatisches Lager der eingangs genannten Art zu schaffen, das eine verbesserte Handhabung für den Benutzer bietet. Darüber hinaus soll das automatische Lager vorzugsweise eine größere Freiheit hinsichtlich der Konstruktion bieten als herkömmliche Lager.

Es ist ferner die Aufgabe der vorliegenden Erfindung, ein Verfahren zur Steuerung eines automatischen Lagers bereitzustellen.

Das erfindungsgemäße automatische Lager ist definiert durch die Merkmale des Anspruchs 1. Das erfindungsgemäße Verfahren ist definiert durch die Merkmale des Anspruchs 9.

Das erfindungsgemäße automatische Lager zur Lagerung von Gegenständen weist einen Lagerbereich mit mehreren Lagerplätzen für die Gegenstände auf, wobei die Lagerplätze zur Einlagerung und Entnahme der Gegenstände oder nur zur Entnahme der Gegenstände von einem Manipulator bedienbar sind. Der Lagerbereich ist zumindest teilweise von Gehäusewänden umgeben, wobei vorzugsweise in mindestens einer der Gehäusewände eine Zugangstür angeordnet ist. Das automatische Lager weist eine Steuervorrichtung zur Steuerung des Manipulators und zur Verwaltung der Lagerbereiche auf, sowie eine Anzeigevorrichtung mit einem Anzeigendisplay, wobei eine Datenkommunikation zwischen der Anzeigevorrichtung und der Steuervorrichtung erfolgt.

Bei dem erfindungsgemäßen automatischen Lager ist die Anzeigevorrichtung an oder in einer der Gehäusewände oder an oder in der Zugangstür angeordnet, wobei das Anzeigendisplay eine langgestreckte, rechteckige Form aufweist und im Hochformat angeordnet ist.

Die Erfindung ist dadurch gekennzeichnet, dass die Steuervorrichtung eine Position eines auf dem Anzeigendisplay darstellbaren Anzeigenabschnitts in vertikaler Richtung mittels eines in Abhängigkeit von Steuerdaten erzeugten Steuerbefehls und/oder in Abhängigkeit eines Eingabebefehls erzeugten Steuerbefehls zur Anpassung an Gewohnheiten eines Benutzers oder an eine Größe eines Benutzers steuert.

Das Anzeigendisplay kann beispielsweise Abmessungen mit Seitenverhältnissen zwischen 1,5:1 und 3:1 aufweisen, wobei sich die längere Erstreckung in vertikaler Richtung erstreckt. Durch das Vorsehen einer derartigen Anzeigevorrichtung im Hochformat ist es in erfindungsgemäßer Weise möglich, einen Anzeigenabschnitt auf dem Anzeigendisplay in vertikaler Richtung mittels des Steuerbefehls zu verändern und somit an die Gewohnheiten oder die Größe eines Benutzers anzupassen.

Insbesondere bei einer lang andauernden Nutzung des erfindungsgemäßen automatischen Lagers, wie beispielsweise bei der Einlagerung einer Vielzahl von Gegenständen, kann somit der Benutzer beispielsweise einen für die Einlagerung notwendigen Anzeigenabschnitt auf eine für den Benutzer angenehme Höhe positionieren, sodass die Benutzung des erfindungsgemäßen Lagers für den Benutzer wesentlich ergonomischer ist.

Der Anzeigenabschnitt kann beispielsweise Daten der Steuervorrichtung darstellen. Auch kann vorgesehen sein, dass der Anzeigenabschnitt die gesamte Breite des Anzeigedisplays einnimmt. Mit anderen Worten: Der Anzeigenabschnitt erstreckt sich in horizontaler Richtung über die gesamte Erstreckung des Anzeigendisplays in horizontaler Richtung.

Es kann auch vorgesehen sein, dass die Anzeigevorrichtung in der Gehäusewand oder der Zugangstür flächenbündig mit der einer Anzeigevorrichtung umgebende Außenfläche der Gehäusewand oder Zugangstür angeordnet ist. Dadurch wird eine platzsparende Anordnung sowie eine für den Betrachter ästhetisch ansprechende Gestaltung und eine einfache Reinigung der Gehäusewand bzw. Zugangstür ermöglicht.

Auf dem erfindungsgemäßen Anzeigendisplay können neben dem genannten Anzeigenabschnitt auch noch weitere Anzeigenabschnitte, beispielsweise ein zweiter und/oder dritter Anzeigenabschnitt angezeigt werden. Beispielsweise können auf dem Anzeigenabschnitt für die Benutzung des erfindungsgemäßen Lagers, wie beispielsweise der Einlagerung, notwendige Daten ausgegeben werden. Ein weiterer Anzeigenabschnitt, der beispielsweise oberhalb oder unterhalb des Anzeigenabschnitts angeordnet sein kann, bietet die Möglichkeit, weitere Daten der Steuervorrichtung, die für den Einlagerungsvorgang nicht relevant sind, beispielsweise Daten bezügliche des Manipulators oder bezüglich der Lagerverwaltung auszugeben.

Erfindungsgemäß ist vorgesehen, dass der Anzeigenabschnitt nicht das gesamte Anzeigendisplay einnimmt, sondern oberhalb und unterhalb des Anzeigenabschnitts von dem Anzeigenabschnitt ungenutzte Bereiche des Anzeigendisplays verbleiben. In diesen Bereichen kann der weitere Anzeigenabschnitt angeordnet sein, der für die momentane Benutzung des Lagers, wie beispielsweise eines Einlagerungsvorgangs, nicht unbedingt notwendige Daten anzeigt. Es kann vorgesehen sein, dass die Steuervorrichtung die vertikale Position des weiteren Anzeigenabschnitts in Abhängigkeit der vertikalen Position des Anzeigenabschnitts oder in Abhängigkeit der Steuerdaten oder des Eingabebefehls festlegt. Somit kann beispielsweise eine automatische Positionierung des weiteren Anzeigenabschnitts oberhalb oder unterhalb des Anzeigenabschnitts erfolgen, in Abhängigkeit davon, ob oberhalb oder unterhalb des Anzeigenabschnitts entsprechend Platz in vertikaler Richtung für den weiteren Anzeigenabschnitt vorhanden ist. Auch kann vorgesehen sein, dass die vertikale Position des weiteren Anzeigenabschnitts geändert wird, wenn aufgrund der vertikalen Positionierung des Anzeigenabschnitts nicht mehr ausreichend Platz für den weiteren Anzeigenabschnitts vorhanden ist.

Die Positionierung des weiteren Anzeigenabschnitts kann auch über eine Benutzereingabe erfolgen oder festgelegt sein. Auch kann vorgesehen sein, dass die Steuervorrichtung den weiteren Anzeigenabschnitt aufteilt und beispielsweise, wenn der Anzeigenabschnitt in vertikaler Richtung mittig auf dem Anzeigendisplay positioniert ist, die Teile des weiteren Anzeigenabschnitts oberhalb und unterhalb des Anzeigenabschnitts anordnet.

Vorzugsweise weist das erfindungsgemäße Lager eine Eingabevorrichtung auf, über die der Eingabebefehl eingebbar ist. Mittels der Eingabevorrichtung kann somit durch den Benutzer den Eingabebefehl, in dessen Abhängigkeit der Steuerbefehl zur Steuerung der vertikalen Position des Anzeigenabschnitts gesteuert wird, eingegeben werden, sodass der Benutzer die vertikale Position des Anzeigenabschnitts über die Eingabevorrichtung steuern kann. Selbstverständlich ist es auch möglich, über die Eingabevorrichtung weitere Befehle an die Steuervorrichtung einzugeben, beispielsweise Befehle hinsichtlich der Benutzung des Lagers, wie beispielsweise der Einlagerung und/oder der Auslagerung von Gegenständen.

Das erfindungsgemäße Lager kann eine erste Kamera aufweisen, die zur Aufnahme eines Bildes eines vor der Anzeigevorrichtung angeordneten Bereichs dient, wobei die Steuervorrichtung die Steuerdaten durch Auswertung des Bildes erzeugt. Mit anderen Worten: Die erste Kamera erfasst den Raum vor der Anzeigevorrichtung und wertet das mittels der Kamera erzeigte Bild aus. Somit kann beispielsweise über die Bildauswertung eine sich vor der Anzeigevorrichtung befindliche Person erfasst und deren Größe oder die Position deren Augen mittels der Bildauswertung ermittelt werden. In Abhängigkeit von den ermittelten Daten können dann die Steuerdaten erzeugt werden, aus denen dann der Steuerbefehl zur Steuerung der vertikalen Position des Anzeigenabschnitts auf dem Anzeigendisplay erfolgt. Mittels des erfindungsgemäßen Lagers kann somit automatisch eine Anpassung der vertikalen Position des Anzeigenabschnitts auf dem Anzeigendisplay in Abhängigkeit von der sich vor der Anzeigevorrichtung befindlichen Person erfolgen. Beispielsweise kann bei dem Start einer Benutzung mittels der ersten Kamera die Größe der Person ermittelt werden und die Position des Anzeigenabschnitts entsprechend eingestellt werden.

Es besteht auch die Möglichkeit, dass die Steuerdaten durch den Eingabebefehl erzeugbar und in der Steuervorrichtung speicherbar sind, wobei über eine Identifikationseingabe die Steuerdaten zur Steuerung der Position des Anzeigenabschnitts abrufbar sind. Bei dem erfindungsgemäßen Lager kann somit vorgesehen sein, dass die Steuerdaten zur Erzeugung des Steuerbefehls, der die Position des Anzeigenabschnitts steuert, einmal erzeugt werden und in der Steuervorrichtung gespeichert werden. Ein Benutzer kann somit die für ihn gewünschte Position des Anzeigenabschnitts einmalig einstellen und die entsprechenden Steuerdaten können durch eine Identifikationseingabe zu einem späteren Zeitpunkt zur Steuerung der Position des Anzeigenabschnitts wieder abgerufen werden.

Die Identifikationseingabe kann beispielsweise durch eine Bildauswertung von Bildern von Körperteilen des Benutzers erfolgen.

Vorzugsweise weist das Lager einen Identifikationssensor auf, über den die Identifikationseingabe erfolgt. Der Identifikationssensor kann beispielsweise ein Fingerabdrucksensor oder Irisscanner sein.

Grundsätzlich besteht auch die Möglichkeit, dass die erste Kamera als Identifikationssensor dient und eine Identifikationseingabe erfolgt, indem das Bild der ersten Kamera ausgewertet wird und eine vor der Anzeigevorrichtung befindliche Person durch Identifikation in dem Bild, insbesondere durch Gesichtserkennung, identifiziert wird.

Die über das Bild der ersten Kamera vorgenommene Identifizierung oder die Identifizierung über den Identifikationssensor kann auch dazu verwendet werden, dass ein Benutzer sich an der Steuervorrichtung zur Bedienung des automatischen Lagers anmeldet.

Vorzugsweise ist vorgesehen, dass das Anzeigendisplay ein Touchdisplay ist. Somit können Daten, Steuerbefehle und ähnliches direkt über das Anzeigendisplay eingegeben werden und über die Datenkommunikation an die Steuervorrichtung übermittelt werden. Das Touchdisplay kann auch als Eingabevorrichtung zur Eingabe des Eingabebefehls dienen.

In einer bevorzugten Ausführungsform des erfindungsgemäßen Lagers weist das erfindungsgemäße Lager mindestens eine zweite Kamera auf, wobei die mindestens eine zweite Kamera auf den Lagerbereich gerichtet ist und wobei von der mindestens einen zweiten Kamera aufgenommene Bilddaten von der Anzeigevorrichtung anzeigbar sind. Da die mindestens eine zweite Kamera Bilddaten des Lagerbereichs aufnimmt, die dann an der Anzeigevorrichtung angezeigt werden, kann bei dem erfindungsgemäßen Lager auf ein Sichtfenster verzichtet werden. Etwaige konstruktive Einschränkungen, die sich bei vorbekannten Lagern aufgrund des Sichtfensters ergeben haben, sind somit bei dem erfindungsgemäßen Lager nicht mehr vorhanden. Da die mindestens eine zweite Kamera an nahezu einer beliebigen Position in dem Lagerbereich angeordnet sein kann, ist der Grad der Konstruktionsfreiheit bei dem erfindungsgemäßen Lager somit deutlich erhöht und Bereiche in dem Lager, die bei vorbekannten Lagern frei bleiben mussten, um den Sichtweg zwischen dem Sichtfenster und dem Lagerbereich nicht zu versperren, können anderweitig genutzt werden. Darüber hinaus können die durch die mindestens eine zweite Kamera erzeugten Bilddaten deutlich mehr Informationen bieten als ein Blick durch ein Sichtfenster, da beispielsweise Vergrößerungen möglich sind, oder auch eine Verschwenkvorrichtung für die zweite Kamera vorgesehen sein kann, so dass der Lagerbereich mittels der zweiten Kamera aus unterschiedlichen Blickwinkeln betrachtet werden kann.

Das von der mindestens einen zweiten Kamera aufgenommene Bild kann beispielsweise in einem weiteren Anzeigenabschnitt und beispielsweise gleichzeitig mit dem Anzeigenabschnitt, der für die Bedienung des Lagers verwendet wird, dargestellt werden.

Die Erfindung kann auch vorsehen, dass das erfindungsgemäße Lager mehrere zweite Kameras aufweist, die verschiedene Bereich des Lagerbereichs aufnehmen. Die von den mehreren zweiten Kameras aufgenommenen Bilder können in einem weiteren Anzeigenbereich oder auch in mehreren weiteren Anzeigenbereichen dargestellt werden.

Die Erfindung sieht ferner ein Verfahren zur Steuerung eines automatischen Lagers zur Lagerung von Gegenständen mit einem Lagerbereich mit mehreren Lagerplätzen für die Gegenstände vor, wobei die Lagerplätze zur Einlagerung und Entnahme der Gegenstände oder zur Entnahme der Gegenstände von einem Manipulator bedienbar sind. Das erfindungsgemäße Verfahren weist folgende Schritte auf:
- Erzeugen eines Steuerbefehls in Abhängigkeit von Steuerdaten und/oder in Abhängigkeit eines Eingabebefehls,
- Steuern einer Position eines auf dem Anzeigendisplay einer Anzeigevorrichtung dargestellten Anzeigenabschnitts in vertikaler Richtung mittels des Steuerbefehls,
- Ausgeben von Daten einer Steuervorrichtung des Lagers in dem auf dem Anzeigendisplay dargestellten Anzeigenabschnitt.

Das erfindungsgemäße Verfahren kann insbesondere zur Steuerung des zuvor beschriebenen erfindungsgemäßen Lagers verwendet werden.

Durch das erfindungsgemäße Verfahren kann ein automatisches Lager in vorteilhafter Weise durch einen Bediener gesteuert werden, da die Position eines Anzeigendisplays, mittels dem dem Bediener Daten der Steuervorrichtung angezeigt werden, in vorteilhafter Weise auf eine für den Bediener vorteilhafte Höhe eingestellt werden kann.

Vorzugsweise ist vorgesehen, dass der Eingabebefehl über eine Eingabevorrichtung eingegeben wird.

Bei dem erfindungsgemäßen Verfahren kann vorgesehen sein, dass die Steuerdaten durch den Eingabebefehl erzeugt und in der Steuervorrichtung gespeichert werden, wobei über eine Identifikationseingabe die Steuerdaten zur Steuerung der Position des Anzeigenabschnitts abgerufen werden. Mit dem erfindungsgemäßen Verfahren kann somit durch eine Identifikationseingabe des Benutzers automatisch die vertikale Position des Anzeigenabschnitts eingestellt werden.

Bei dem erfindungsgemäßen Verfahren kann auch vorgesehen sein, dass ein Bild eines vor der Anzeigevorrichtung angeordneten Bereichs aufgenommen und ausgewertet wird und anhand des ausgewerteten Bildes die Steuerdaten erzeugt werden.

Dabei kann vorgesehen sein, dass bei der Auswertung des Bildes ein Gesicht und/oder Augen einer vor der Anzeigevorrichtung befindlichen Person erkannt werden und anhand der Position des Gesichts und/oder der Position der Augen die Steuerdaten erzeugt werden. Somit kann eine an die Person angepasste vertikale Position des Anzeigenabschnitts mittels des erfindungsgemäßen Verfahrens vorgenommen werden.

Das erfindungsgemäße Verfahren kann auch vorsehen, dass mittels der Auswertung des Bildes eine Identifikation der Person erfolgt, sodass die Identifikationseingabe durch das Ergebnis der Auswertung des Bildes erfolgt. Die Identifikation der Person kann beispielsweise durch Gesichtserkennung erfolgen.

Bei dem erfindungsgemäßen Verfahren kann auch vorgesehen sein, dass Bilddaten des Lagerbereichs aufgenommen und von der Anzeigevorrichtung ausgegeben werden. Die Ausgabe der Bilddaten des Lagerbereichs kann in einem oder mehreren weiteren Anzeigenabschnitten erfolgen.

Im Folgenden wird unter Bezugnahme auf die nachfolgenden Figuren die Erfindung näher erläutert. Es zeigen:
- Figur 1: eine schematische perspektivische Ansicht eines erfindungsgemäßen automatischen Lagers,
- Figur 2: eine schematische Detaildarstellung der Zugangstür des erfindungsgemäßen Lagers mit integrierter Anzeigevorrichtung und
- Figur 3: eine schematische Detailansicht der Anzeigevorrichtung des erfindungsgemäßen Lagers.

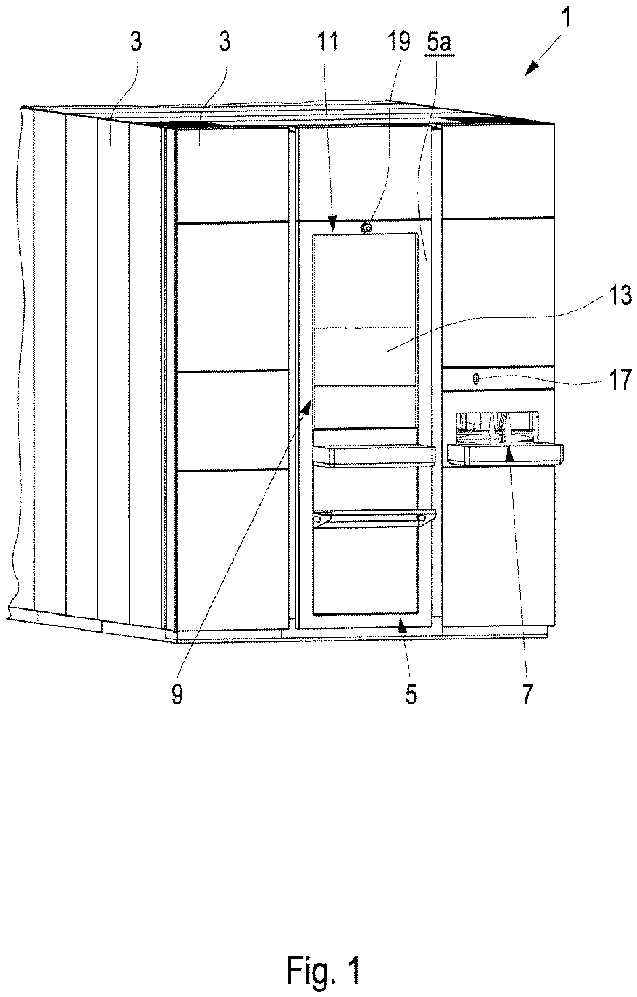

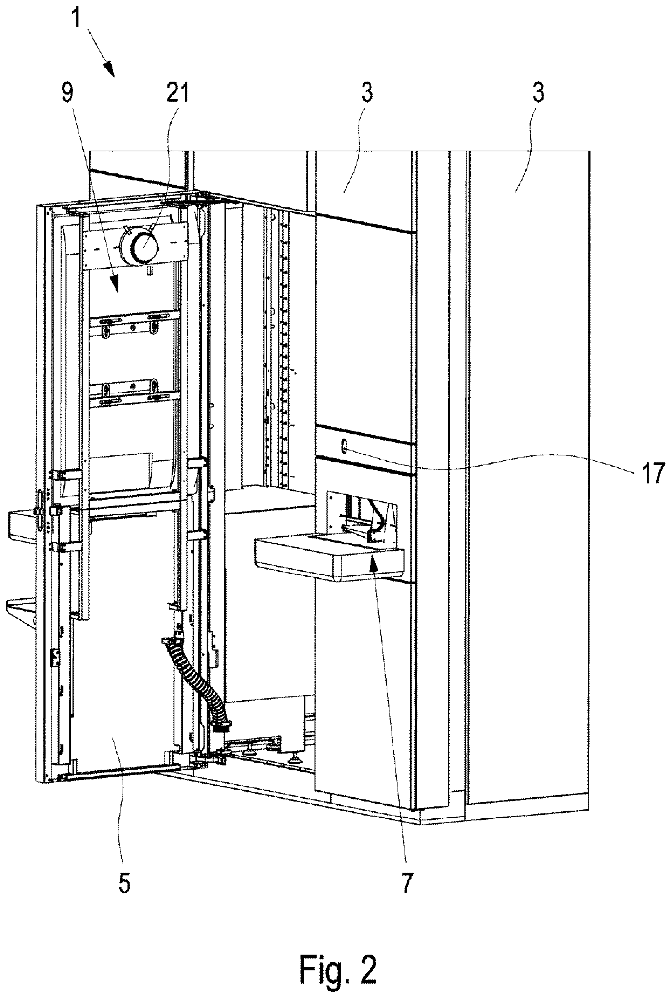

In Figuren 1 und 2 ist ein automatisches Lager 1 schematisch in einer Perspektivdarstellung gezeigt.

Das automatische Lager 1 dient zur Lagerung von Gegenständen, wie beispielsweise Medikamentenverpackungen.

Ein Lagerbereich mit mehreren Lagerplätzen ist von Gehäusewänden 3 umgeben. In einem Frontbereich ist in einer der Gehäusewände eine Zugangstür 5 angeordnet. Über die Zugangstür 5 ist ein Zutritt in den Lagerbereich möglich, wie aus Figur 2 hervorgeht. Ein Bediener kann somit den Lagerbereich betreten, um beispielsweise Wartungs- oder Reinigungsaufgaben wahrzunehmen.

Die Lagerplätze werden über einen Manipulator, der nicht dargestellt ist, bedient, sodass die Gegenstände mittels des Manipulators auf die Lagerplätze eingelagert oder von diesen entnommen werden können.

Das automatische Lager 1 weist eine Einlagerungsöffnung 7 auf, durch die die Gegenstände in das automatische Lager eingelagert werden können.

In der Zugangstür 5 ist eine Anzeigevorrichtung 9 angeordnet. Die Anzeigevorrichtung 9 ist, wie beispielsweise aus Figur 2 hervorgeht, an der Rückwand der Zugangstür 5 befestigt. Die Zugangstür 5 weist eine Aussparung auf, in die die Anzeigevorrichtung 9 eingesetzt ist, sodass die sich die Anzeigevorrichtung 9 flächenbündig an die die Anzeigevorrichtung 9 umgebenden Außenflächen 5a der Zugangstür 5 anschließt.

Die Anzeigevorrichtung 9 weist ein Anzeigendisplay 11 mit einer langgestreckten rechteckigen Form auf. Beispielsweise kann das Anzeigendisplay 11 ein Seitenverhältnis von 1,77:1 aufweisen, wobei die Anzeigevorrichtung 9 mit im Hochformat angeordneten Anzeigendisplay 11 an der Zugangstür 5 angeordnet ist.

Die Anzeigevorrichtung 9 kommuniziert mit einer Steuervorrichtung zur Steuerung des Manipulators und zur Verwaltung der Lagerbereiche und gibt beispielsweise Daten für einen Benutzer aus. Daten können beispielsweise in einem Anzeigenabschnitt 13 ausgegeben werden, der die gesamte Breite (Erstreckung in horizontaler Richtung) des Anzeigendisplays 11 einnimmt. Die vertikale Position des Anzeigenabschnitts 13 auf dem Anzeigendisplay 11 ist mittels der Steuervorrichtung veränderbar, wobei die Steuervorrichtung anhand eines Steuerbefehls die vertikale Position des Anzeigenabschnitts 13 steuert. Der Steuerbefehl kann beispielsweise mittels eines Eingabebefehls oder in Abhängigkeit von Steuerdaten, die beispielsweise zuvor in der Steuervorrichtung gespeichert wurden, gesteuert werden. Auf diese Weise lässt sich der Anzeigenabschnitt 13 auf eine von dem Benutzer gewünschte vertikale Position oder in eine an den Benutzer angepasste vertikale Position verstellen.

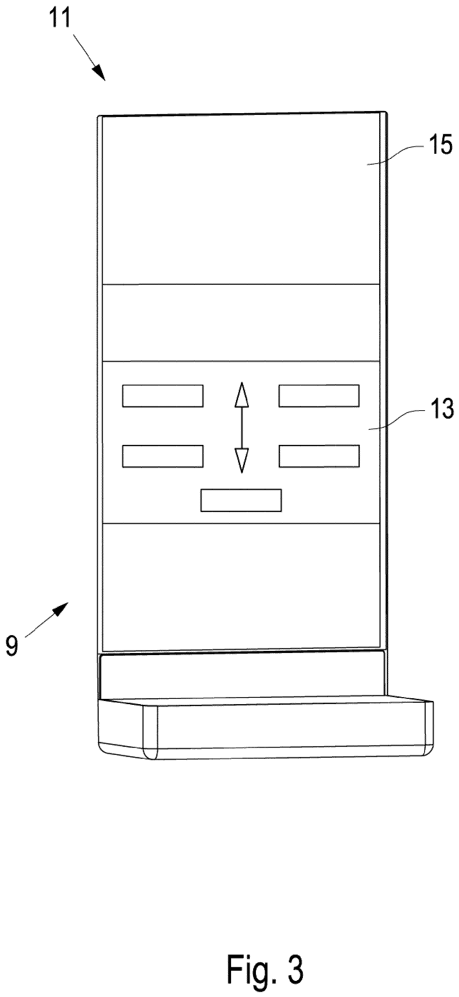

Die Verstellung des Anzeigenabschnitts 13 ist am besten aus Figur 3, in der eine schematische Detaildarstellung der Anzeigevorrichtung 9 dargestellt ist, zu erkennen. Die Verstellung ist durch einen entsprechenden Doppelpfeil angedeutet. Wie aus Figur 3 hervorgeht, nimmt der Anzeigenabschnitt 13 nicht das gesamte Anzeigendisplay 11 ein, sondern oberhalb und unterhalb des Anzeigenabschnitts 13 verbleiben von dem Anzeigenabschnitt 13 ungenutzte Bereiche des Anzeigendisplays 11. In diesen Bereichen kann ein weiterer Anzeigenabschnitt 15 angeordnet sein, der für die momentane Benutzung des Lagers, wie beispielsweise eines Einlagerungsvorgangs, nicht unbedingt notwendige Daten anzeigt. Es kann vorgesehen sein, dass die Steuervorrichtung die vertikale Position des weiteren Anzeigenabschnitts 15 in Abhängigkeit der vertikalen Position des Anzeigenabschnitts 13 oder in Abhängigkeit der Steuerdaten festlegt. Somit kann beispielsweise eine automatische Positionierung des weiteren Anzeigenabschnitts 15 oberhalb des Anzeigenabschnitts 13 erfolgen, wenn aufgrund der vertikalen Position des Anzeigenabschnitts 13 unterhalb des Anzeigenabschnitts 13 nicht ausreichend Platz in vertikaler Richtung für den weiteren Anzeigenabschnitt 15 vorhanden ist. Auch kann vorgesehen sein, dass die Steuervorrichtung den weiteren Anzeigenabschnitt 15 aufteilt und beispielsweise, wenn der Anzeigenabschnitt 13 in vertikaler Richtung mittig auf dem Anzeigendisplay positioniert ist, die Teile des weiteren Anzeigenabschnitts 15 oberhalb und unterhalb des Anzeigenabschnitts 13 anordnet.

Das erfindungsgemäße Lager 1 kann einen Fingerabdrucksensor 17 aufweisen, der für eine Identifikationseingabe des Benutzers dient. Anhand der somit erfolgten Identifikation kann sich der Benutzer einerseits an der Steuervorrichtung des Lagers 1 anmelden. Darüber hinaus sind durch die Identifikationseingabe zuvor abgespeicherte Steuerdaten abrufbar, über die die vertikale Position des Anzeigenabschnitts 13 gesteuert werden.

Zusätzlich oder alternativ zu dem Fingerabdrucksensor kann eine erste Kamera 19 vorgesehen sein, die in dem in Figur 1 dargestellten Ausführungsbeispiel oberhalb der Anzeigevorrichtung 9 angeordnet ist und den Bereich vor der Anzeigevorrichtung 9 aufnimmt. Die von der Kamera 19 aufgenommenen Bilder können einer Bildauswertung unterzogen werden, worüber ein Gesicht und/oder Augen einer vor der Anzeigevorrichtung 9 befindlichen Person erkannt werden, sodass die Position des Anzeigenabschnitts 13 an die Position des Gesichts und/oder der Augen angepasst werden kann, indem entsprechende Steuerdaten durch die Bildauswertung ermittelt werden.

Die erste Kamera 19 kann auch zur Identifikation einer vor der Anzeigevorrichtung 9 befindlichen Person genutzt werden, indem beispielweise eine Gesichtserkennung bei der Bildauswertung durchgeführt wird.

An der dem Lagerbereich zugewandten Seite der Zugangstür 5 ist eine zweite Kamera 21 angeordnet, die in Figur 2 schematisch dargestellt ist. Die zweite Kamera 21 ist auf den Lagerbereich gerichtet und nimmt Bilddaten des Lagerbereichs auf. Diese Bilddaten können auf dem Anzeigendisplay 11, beispielsweise im zweiten Anzeigenabschnitt 15 dargestellt werden. Auf diese Weise kann auf ein Sichtfenster für den Lagerbereich verzichtet werden.

In Figur 2 ist die zweite Kamera an der Rückseite der Zugangstür 5 angeordnet. Selbstverständlich ist auch eine Anordnung der zweiten Kamera 21 an einer anderen Position im Lager möglich.

Das Anzeigendisplay 11 der Anzeigevorrichtung 9 ist als Touchdisplay ausgeführt, sodass die Anzeigevorrichtung 9 als Eingabevorrichtung dienen kann, über die Eingaben für die Steuervorrichtung vorgenommen werden können oder auch der Eingabebefehl, aus dem der Steuerbefehl zur Steuerung der Position des Anzeigenabschnitts 13 erfolgt, eingegeben werden kann.

Das erfindungsgemäße Lager 1 ermöglich eine besonders vorteilhafte Bedienung, da der Anzeigenabschnitt 13 an die für einen Benutzer vorteilhafte vertikale Position angeordnet werden kann. Ferner kann durch das Vorsehen der zweiten Kamera, die Bilddaten des Lagerbereichs aufnimmt, auf ein Sichtfenster verzichtet werden, sodass eine größere Freiheit bei der Konstruktion des erfindungsgemäßen Lagers 1 besteht.

### Bezugszeichenliste

- 1: automatisches Lager
- 3: Gehäusewände
- 5: Zugangstür
- 5a: Außenflächen
- 7: Einlagerungsöffnung
- 9: Anzeigevorrichtung
- 11: Anzeigendisplay
- 13: Anzeigenabschnitt
- 15: zweiter Anzeigenabschnitt
- 17: Fingerabdrucksensor
- 19: erste Kamera
- 21: zweite Kamera

## Patentansprüche

1. Automatisches Lager (1) zur Lagerung von Gegenständen,
mit einem Lagerbereich mit mehreren Lagerplätzen für die Gegenstände, wobei die Lagerplätze zur Einlagerung und Entnahme der Gegenstände oder zur Entnahme der Gegenstände von einem Manipulator bedienbar sind, wobei der Lagerbereich zumindest teilweise von Gehäusewänden (3) umgeben ist, wobei vorzugsweise in mindestens einer der Gehäusewände (3) eine Zugangstür (5) angeordnet ist,
mit einer Steuervorrichtung zur Steuerung des Manipulators und zur Verwaltung der Lagerbereiche und mit einer Anzeigevorrichtung (9) mit einem Anzeigendisplay (11), wobei eine Datenkommunikation zwischen der Anzeigevorrichtung (9) und der Steuervorrichtung erfolgt,
wobei die Anzeigevorrichtung (9) an oder in einer der Gehäusewände (3) oder an oder in der Zugangstür (5) angeordnet ist, wobei das Anzeigendisplay (11) eine langestreckte, rechteckige Form aufweist und im Hochformat angeordnet ist,
**dadurch gekennzeichnet,**
**dass** die Steuervorrichtung eine Position eines auf dem Anzeigendisplay (11) darstellbaren Anzeigenabschnitt (13) in vertikaler Richtung mittels eines in Abhängigkeit von Steuerdaten und/oder in Abhängigkeit eines Eingabebefehls erzeugten Steuerbefehls zur Anpassung an Gewohnheiten eines Benutzers oder an eine Größe eines Benutzers steuert.

2. Lager nach Anspruch 1, **gekennzeichnet durch** eine Eingabevorrichtung, über die der Eingabebefehl eingebbar ist.

3. Lager nach Anspruch 1 oder 2 **gekennzeichnet durch** eine erste Kamera (19) zur Aufnahme eines Bildes eines vor der Anzeigevorrichtung (9) angeordneten Bereichs, wobei die Steuervorrichtung die Steuerdaten durch Auswertung des Bildes erzeugt.

4. Lager nach einem der Ansprüche 1 bis 3, **dadurch gekennzeichnet, dass** die Steuerdaten durch den Eingabebefehl erzeugbar und in der Steuervorrichtung speicherbar sind, wobei über eine Identifikationseingabe die Steuerdaten zur Steuerung der Position des Anzeigenabschnitts (13) abrufbar sind.

5. Lager nach Anspruch 4, **gekennzeichnet durch** einen Identifikationssensor, über den die Identifikationseingabe erfolgt.

6. Lager nach Anspruch 5, **dadurch gekennzeichnet, dass** der Identifikationssensor ein Fingerabdrucksensor (17) ist.

7. Lager nach einem der Ansprüche 1 bis 6, **dadurch gekennzeichnet, dass** das Anzeigendisplay (11) ein Touchdisplay ist.

8. Lager nach einem der Ansprüche 1 bis 7, **gekennzeichnet, durch** eine zweite Kamera, wobei die zweite Kamera (21) auf den Lagerbereich gerichtet ist und wobei von der zweiten Kamera (21) aufgenommene Bilddaten von der Anzeigevorrichtung (9) anzeigbar sind.

9. Verfahren zur Steuerung eines automatischen Lagers (1) zur Lagerung von Gegenständen mit einem Lagerbereich mit mehreren Lagerplätzen für die Gegenstände, wobei die Lagerplätze zur Einlagerung und Entnahme der Gegenstände oder zur Entnahme der Gegenstände von einem Manipulator bedienbar sind, mit folgenden Schritten:
Erzeugen eines Steuerbefehls in Abhängigkeit von Steuerdaten und/oder in Abhängigkeit eines Eingabebefehls,
Steuern einer Position eines auf einem, eine langgestreckte, rechteckige Form aufweisenden und in einem Hochformat angeordneten Anzeigendisplay (11) einer Anzeigevorrichtung (9) dargestellten Anzeigenabschnitts (13) in vertikaler Richtung mittels des Steuerbefehls zur Anpassung an Gewohnheiten eines Benutzers oder an eine Größe eines Benutzers,
Ausgeben von Daten einer Steuervorrichtung des Lagers (1) in dem auf dem Anzeigendisplay (11) dargestellten Anzeigenabschnitt (13).

10. Verfahren nach Anspruch 9, **dadurch gekennzeichnet, dass** der Eingabebefehl über eine Eingabevorrichtung eingegeben wird.

11. Verfahren nach Anspruch 9 oder 10, **dadurch gekennzeichnet, dass** die Steuerdaten durch den Eingabebefehl erzeugt und in der Steuervorrichtung gespeichert werden, wobei über eine Identifikationseingabe die Steuerdaten zur Steuerung der Position des Anzeigenabschnitt (13) abgerufen werden.

12. Verfahren nach einem der Ansprüche 9 bis 11, **dadurch gekennzeichnet, dass** ein Bild eines vor der Anzeigevorrichtung (9) angeordneten Bereichs aufgenommen und ausgewertet wird und anhand des ausgewerteten Bildes die Steuerdaten erzeugt werden.

13. Verfahren nach Anspruch 12, **dadurch gekennzeichnet, dass** bei der Auswertung des Bildes ein Gesicht und/oder Augen einer vor der Anzeigevorrichtung (9) befindlichen Person erkannt werden und anhand der Position des Gesichts und/oder der Augen die Steuerdaten erzeugt werden.

14. Verfahren nach einem der Ansprüche 9 bis 13, **dadurch gekennzeichnet, dass** Bilddaten des Lagerbereichs aufgenommen und von der Anzeigevorrichtung (9) ausgegeben werden.

## Claims

1. An automatic warehouse (1) for storing objects,
comprising a storage region having multiple storage areas for the objects, wherein the storage areas can be operated for storing and removing the objects or for removing the objects from a manipulator, wherein the storage region is at least partially surrounded by housing walls (3), wherein an access door (5) is arranged preferably in at least one of the housing walls (3),
comprising a control device for controlling the manipulator and for managing the storage regions and comprising a display device (9) having a display (11), wherein data communication is performed between the display device (9) and the control device,
wherein the display device (9) is arranged on or in one of the housing walls (3) or on or in the access door (5), wherein the display (11) has an elongated, rectangular shape and is arranged in the portrait position,
**characterized in that**
the control device controls a position of a display section (13) that can be displayed on the display (11) in the vertical direction by means of a control command generated as a function of control data and/or as a function of an input command to adapt to the habits of a user or to the size of a user.

2. The warehouse according to claim 1, **characterized by** an input device via which the input command can be inputted.

3. The warehouse according to claim 1 or 2, **characterized by** a first camera (19) for capturing an image of a region located in front of the display device (9), the control device generating the control data by evaluating the image.

4. The warehouse according to any one of claims 1 to 3, **characterized in that** the control data can be generated and stored in the control device by the input command, with the control data being retrievable via an identification input to control the position of the display section (13).

5. The warehouse according to claim 4, **characterized by** an identification sensor via which the identification input is made.

6. The warehouse according to claim 5, **characterized in that** the identification sensor is a fingerprint sensor (17).

7. The warehouse according to any one of claims 1 to 6, **characterized in that** the display (11) is a touch display.

8. The warehouse according to any one of claims 1 to 7, **characterized by** a second camera, wherein the second camera (21) is directed towards the storage region and wherein the image data captured by the second camera (21) can be displayed by the display device (9).

9. A method for controlling an automatic warehouse (1) for storing objects comprising a storage region having multiple storage areas for the objects, wherein the storage areas can be operated for storing and removing the objects or for removing the objects from a manipulator, the method comprising the steps of:
generating a control command as a function of control data and/or as a function of an input command,
controlling a position of a display section (13), which is displayed on the display (11) of a display device (9) having an elongated, rectangular shape and arranged in a portrait position, in the vertical direction by means of the control command to adapt to the habits of a user or to the size of a user,
outputting data of a control device of the warehouse (1) in the display section (13) displayed on the display (11).

10. The method according to claim 9, **characterized in that** the input command is inputted via an input device.

11. The method according to claim 9 or 10, **characterized in that** the control data are generated and stored in the control device by the input command, wherein the control data for controlling the position of the display section (13) are retrieved by an identification input.

12. The method according to any one of claims 9 to 11, **characterized in that** an image of a region located in front of the display device (9) is captured and evaluated and that the control data are generated based on the evaluated image.

13. The method according to claim 12, **characterized in that** upon the evaluation of the image, a face and/or the eyes of a person present in front of the display device (9) are recognized and that the control data are generated based on the position of the face and/or the position of the eyes.

14. The method according to any one of claims 9 to 13, **characterized in that** image data of the storage region are captured and are output by the display device (9).

## Revendications

1. Appareil de stockage automatique (1) pour le stockage d'objets,
comportant une zone de stockage comportant plusieurs emplacements de stockage pour les objets, les emplacements de stockage pouvant être utilisés par un élément manipulateur pour le stockage et le prélèvement des objets ou pour le prélèvement des objets, la zone de stockage étant entourée au moins partiellement par des parois de logement (3), une porte d'accès (5) étant de préférence disposée dans au moins l'une des parois de logement (3),
comportant un dispositif de commande pour la commande de l'élément manipulateur et pour la gestion des zones de stockage et comportant un dispositif d'affichage (9) comportant un écran d'affichage (11), une communication de données ayant lieu entre le dispositif d'affichage (9) et le dispositif de commande,
le dispositif d'affichage (9) étant disposé sur ou dans l'une des parois de logement (3) ou sur ou dans la porte d'accès (5), l'écran d'affichage (11) présentant une forme allongée rectangulaire et étant disposé en format portrait,
**caractérisé en ce que**
le dispositif de commande commande une position d'une section d'affichage (13) pouvant être représentée sur l'écran d'affichage (11) dans la direction verticale à l'aide d'un ordre de commande généré en fonction de données de commande et/ou en fonction d'un ordre d'entrée pour l'adaptation à des habitudes d'un utilisateur ou à une taille d'un utilisateur.

2. Appareil de stockage selon la revendication 1, **caractérisé par** un dispositif d'entrée, par l'intermédiaire duquel l'ordre d'entrée peut être entré.

3. Appareil de stockage selon la revendication 1 ou 2, **caractérisé par** une première caméra (19) pour l'acquisition d'une image d'une zone disposée devant le dispositif d'affichage (9), le dispositif de commande générant les données de commande par évaluation de l'image.

4. Appareil de stockage selon l'une des revendications 1 à 3,
**caractérisé en ce que** les données de commande peuvent être générées par l'ordre d'entrée et peuvent être enregistrées dans le dispositif de commande, les données de commande pouvant être extraites par l'intermédiaire d'une entrée d'identification pour la commande de la position de la section d'affichage (13).

5. Appareil de stockage selon la revendication 4, **caractérisé par** un capteur d'identification, par l'intermédiaire duquel l'entrée d'identification a lieu.

6. Appareil de stockage selon la revendication 5, **caractérisé en ce que** le capteur d'identification est un capteur d'empreintes digitales (17).

7. Appareil de stockage selon l'une des revendications 1 à 6,
**caractérisé en ce que** l'écran d'affichage (11) est un écran tactile.

8. Appareil de stockage selon l'une des revendications 1 à 7,
**caractérisé par** une seconde caméra, la seconde caméra (21) étant dirigée vers la zone de stockage et des données d'image acquises par la seconde caméra (21) pouvant être affichées par le dispositif d'affichage (9).

9. Procédé pour la commande d'un appareil de stockage automatique (1) pour le stockage d'objets comportant une zone de stockage comportant plusieurs emplacements de stockage pour les objets, les emplacements de stockage pouvant être utilisés par un élément manipulateur pour le stockage et le prélèvement des objets ou pour le prélèvement des objets, comportant les étapes suivantes :
génération d'un ordre de commande en fonction de données de commande et/ou en fonction d'un ordre d'entrée,
commande d'une position d'une section d'affichage (13) représentée sur un écran d'affichage (11), présentant une forme allongée rectangulaire et disposé en format portrait, d'un dispositif d'affichage (9) dans la direction verticale à l'aide de l'ordre de commande pour l'adaptation à des habitudes d'un utilisateur ou à une taille d'un utilisateur,
sortie de données d'un dispositif de commande de l'appareil de stockage (1) dans la section d'affichage (13) représentée sur l'écran d'affichage (11).

10. Procédé selon la revendication 9, **caractérisé en ce que** l'ordre d'entrée est entré par l'intermédiaire d'un dispositif d'entrée.

11. Procédé selon la revendication 9 ou 10, **caractérisé en ce que** les données de commande sont générées par l'ordre d'entrée et sont enregistrées dans le dispositif de commande, les données de commande étant extraites par l'intermédiaire d'une entrée d'identification pour la commande de la position de la section d'affichage (13).

12. Procédé selon l'une des revendications 9 à 11, **caractérisé en ce qu'**une image d'une zone disposée devant le dispositif d'affichage (9) est acquise et évaluée et les données de commande sont générées sur la base de l'image évaluée.

13. Procédé selon la revendication 12, **caractérisé en ce que,** lors de l'évaluation de l'image, un visage et/ou les yeux d'une personne se trouvant devant le dispositif d'affichage (9) sont reconnus et les données de commande sont générées sur la base de la position du visage et/ou des yeux.

14. Procédé selon l'une des revendications 9 à 13, **caractérisé en ce que** des données d'image de la zone de stockage sont acquises et sorties par le dispositif d'affichage (9).
